# EUROPEAN PATENT APPLICATION

(11) **EP 1 775 214 A1**
(43) Date of publication of application: **18.04.2007**
(21) Application number: 05743874.9
(22) Date of filing: 27.05.2005
(51) Int. Cl.: B64C 29/00

(54) **RAPID AIR QUANTITY GENERATING AND WIND DIRECTION CHANGING DEVICE AND AIRCRAFT HAVING THE DEVICE MOUNTED ON SIDE FACE OF AIRFRAME**

(30) Priority: 07.07.2004 JP 2004227322
(71) Applicant: Ikeda, Kaidou, Nishitokyo-shi Tokyo 1880013 (JP)
(72) Inventor: Ikeda, Kaidou, Nishitokyo-shi Tokyo 1880013 (JP)
(74) Representative: Grünecker, Kinkeldey, Stockmair & Schwanhäusser Anwaltssozietät
(86) International application number: PCT/JP2005/009731
(87) International publication number: WO 2006/006311

(57) **Abstract**

[Subject] To achieve mass transportation, freer flights, and safer services in an energy-saving manner by allowing the blowout direction of a shroud included rotor having the drive principle of linear motors that can freely change airflow to be changed freely to produce a device capable of freely changing both airflow and wind direction and by attaching the produced device that can freely change airflow and wind direction to the airframe of an aircraft to control the airflow and wind direction of the device.

[Means for Solution] The present invention achieves a safe and energy-saving aircraft that allows for transportation of a larger number of passengers and cargoes, freer flights in the sky, and easier control by attaching a large-sized or super-sized rapid airflow generation wind direction changing device with a diameter of greater than 10m or 20m to the side surface or wall of the airframe by at least one for each side, that is, at least two in total for both side surfaces or walls and by utilizing the mechanism of the rapid airflow generation wind direction changing devices that can freely control airflow and wind direction.

## Description

### [Technical Field]

The present invention relates to a method for achieving an aircraft capable of serving as if it were a ferry in the sky, aiming at achieving transportation of much more passengers and cargoes, freer flights, and safer services in an energy-saving manner than conventional operations using same rotors such as helicopters or flying platforms for transporting passengers and cargoes in the sky by mounting and fixing a plurality of rapid airflow generation wind direction changing devices onto the side surface or wall of the aircraft and by controlling the airflow and wind direction of each rapid airflow generation wind direction changing device, where each rapid airflow generation wind direction changing device is obtained by attaching a rotor having a shroud (hereinafter referred to as shroud included rotor having the drive principle of linear motors), which is for applying the drive principle of linear motors that can freely change airflow to the vicinities of the blade end portions of a rotor such as a propeller or a fan (hereinafter referred to collectively as propeller) to generate a driving force for the rotor and change blowout direction, integrally to a rapid wind direction changing device capable of changing wind direction rapidly and accurately around one axis up to 360 degrees.

### [Background Art]

Most conventional aircrafts having a rotor such as a propeller that have been put into practical use and actual service are adapted to drive the rotor by connecting a motor to the rotational center axis of the rotor, which requires an immense amount of energy and limits the transportation capacity to a small number of passengers and cargoes for their large-sized engines. Also, since the rotor is supported only at the rotation axis thereof, i.e., at a single point and the blade ends are open ones floating in the air, trying to significantly increase the rotation radius of propeller blades that constitute the rotor results in complicating the provision of the attack angles of the central and end portions of the blades or the width of the blades and also in having a difficult problem in, for example, choosing the material of the blades, particularly between flexibility and stiffness.

As for conventional helicopters that have been put into practical use and actual service, the angular range for safety tilting is limited to about 15 degrees from the vertical axis and the tilt angle in normal operations is about 4 to 5 degrees at a maximum, while as for flying platforms, the floor part on which passengers stand is often installed with no tilting, i.e., no degree of freedom, both of the cases being put into practical use with poor degrees of freedom for tilting.

In conventional helicopters with open blade ends, blades on the side moving forward (hereinafter referred to as forward-moving or ascending blades) and blades on the side moving backward (hereinafter referred to as backward-moving or descending blades) in an approximately horizontally rotating main rotor have their respective different air speeds, resulting in an increase in the lift force on the forward-moving blades while a reduction in the lift force on the backward-moving blades to cause an imbalance between the lift forces and requiring a device for appropriately adjusting the change in the attack angle of the blades in response to a 90-degree delay due to a gyroscopic effect (gyroscopic precession). In addition, when one of a plurality of rotor blades is made higher or lower than the rotation surface of the other rotor blades due to open blade ends and thus the rotation radius of the blades is reduced, there occur an advance due to an increase in the rotation speed of the blades and a delay due to a reaction against the advance, where it is also necessary to address the cases and thereby to provide a device for removing the impacts, requiring various kinds of complex and fragile hinges such as flapping, feathering, and dragging (referred to also as lead-lag or drag) hinges so that stable flights can be kept.

In conventional helicopters with open blade ends, rotor blades are supported by a rotor mast at the rotation axis thereof, i.e., at a single point, while in Patent Documents 10 and 14, rotating blade end portions are supported by fixed ring guides or ring-shaped members (blade supporting pipes) so that rotor blades are supported at the rotation center thereof and the blade end portions, i.e., at two points, though the drive is provided by a motor arranged in the vicinity of the rotational center axis. In the first embodiment of Patent Document 10, since the rotor blades are opened vertically, there occurs an imbalance between lift forces on the forward-moving and backward-moving sides of the rotor blades as well as the rotational disk surface cannot be tilted, whereby it is necessary to generate a force component for forward moving by changing the attack angle of the blades, which makes the feathering axis and feathering hinge indispensable. However, neither flapping hinge nor dragging hinge is estimated as necessary. Also, in the second embodiment, since lift force imbalances can be cancelled using a plurality of rotors and the mutual differences between lift forces on the rotors allow for forward and backward moving as well as leftward and rightward moving, it can be estimated to be flyable even if any kinds of complex and fragile hinges including feathering hinge may not be provided. Further, in Patent Document 14, since the lower surface is covered with a rudder not to come into direct contact with the outside air when moving forward, it is not necessary to consider the air speed difference between the forward-moving and backward-moving sides on, at least, the lower surface of the rotor, and if the outer and inner rotor frames are covered with a film-like or plate-like body (another example of covering using a body through which the air can pass such as a wire mesh is otherwise described and some thought is required in this case), imbalances between lift forces on the forward-moving and backward-moving sides of the rotor blades are further eliminated, which makes flapping hinges, feathering hinges, and dragging hinges unnecessary. Here, although imbalances between lift forces on the forward-moving and backward-moving sides of the rotor blades due to the arrangement that the rotor is opened upward are partially left, the imbalances can be compensated by a thrust fine-motion rudder that is installed on the lower surface of the rotor, which makes every hinge unnecessary. However, in order to establish these inventions, it is essential that the rollers connected to the rotational outer end portions or the blade ends are positioned constantly in the guides of the fixed ring guides or in the pipes of the ring-shaped members (blade supporting pipes) and, assuming that the rotation axis thereof is a first support point, can be held reliably as second support points. This can be achieved only by having a mechanism in which deflection and/or distortion due to expansion and contraction of the rotor blades and particularly their own weights and/or distortion due to vibration during a flight can be addressed and the rollers and blade ends can slide smoothly in the respective guides and pipes. However, Patent Document 10 describes simply that the weight of the rotor blades results in that the rollers connected to the outer end portions of the blades are brought into contact with the U-shaped inner lower surface (inner bottom surface) of the fixed ring guides, and the mechanism cannot address expansion and contraction. As for Patent Document 14, although the mechanism for supporting the blade ends can be considered as a first trial that has never been achieved in the technical fields of helicopters, there is no disclosure about the mechanism in which the blade ends slide and pass through the pipes at a good speed, how the ring-shaped members (blade supporting pipes) address expansion and contraction of the rotor blades, and the positional relationship between the ring-shaped members (blade supporting pipes) and the blade ends when the blades are tilted together with the main body, which makes it extremely difficult to embody the invention. Further, in Patent Document 10, it is arranged that the rollers in the rotational outer end portions be not in contact with any portion including the U-shaped inner lower surface (inner bottom surface) or inner upper surface (inner top surface) of the fixed ring guides to float and rotate in the air during a normal flight. However, in the case of rotor blades with a normal material option having a laminated structure of glass wool, carbon fiber, and/or Kevlar fiber, etc., and metal plates, it is possible to make effective use of lift forces including actions of centrifugal forces with the blade end portions being made higher than the central portion in a funnel shape (inverted cone shape) during a rotation, where in order to prevent the blade ends from being made extremely higher, it is common to aim at generating lift forces that are uniform across the entire blades by reducing the attack angle or the blade width of the blade ends having a higher air speed to relatively suppress the generation of lift forces and by increasing the attack angle or the blade width of the central portion having a lower air speed to relatively increase the generation of lift forces. On the contrary, in Patent Document 10, the blade width of the blade ends is increased extremely to significantly increase the lift forces on the blade end portions, resulting in generating an extreme funnel shape (inverted cone shape), whereby the rotational outer end portions are made higher and the rollers in the outer end portions are pressed against the inner upper surface, i.e., the ceiling part of the U-shaped fixed ring guides with a stronger force than in common helicopters. In Patent Document 10, since the material of the rollers is chosen daringly so that the rollers are broken when it becomes difficult to rotate due to some accidents and/or failures, the rollers are to be broken beyond their strength when almost all lift forces are transmitted to the airframe through the rollers, which makes the aircraft in Patent Document 10 unflyable which has none of various hinges required for flight. Therefore, unlike conventional helicopters with open blade ends which require various kinds of complex and fragile hinges to transmit lift forces to the airframe through the rotation axis thereof, Patent Documents 10 and 14 indicate the possibility of novel helicopters that require no hinge, but there is no sufficient disclosure about how to address expansion and contraction of the rotor blades, i.e., an entity for generating lift forces and the mechanism in which the blade end portions that are important as second support points for the rotor blades slide in the guides and pipes, which makes it extremely difficult to embody the inventions as they are currently disclosed.

Patent Documents 4, 5, 9, 15 and Non-Patent Document 1 each disclose a vertical takeoff and landing aircraft having a fixed wing for generating most of lift forces for cruising and adapted to fly by producing lift forces for takeoff and landing and propulsive forces for cruising using a rotor such as a propeller. As for Patent Documents 5, 9, 15 and Non-Patent Document 1, the drive is provided by applying power to the rotational center axis of the rotor such as a propeller, while as for Patent Document 4, the rotor such as a propeller is driven by producing driving and propulsive forces through explosive combustion of jet fuel in a combustion chamber that is provided in the rotational center of a fan, which consumes an immense amount of energy.

As for driving, Patent Documents 1, 3, 6, and 11 each propose a mechanism of a shroud included rotor in which a rotor such as a propeller is rotated by applying the drive principle of linear motors to the vicinities of the blade end portions of the rotor that can produce a torque (i.e. rotational moment or torsional force couple) efficiently with a minimum amount of energy over conventional systems in which power is applied to the rotational center axis of a rotor such as a propeller while consuming an immense amount of energy. Since the magnitude of a drive torque for the shroud included rotor having the drive principle of linear motors, which is generated in the vicinities of the blade end portions of the rotor, depends on the product of the magnitude of a force generated between a magnet as a stator on the shroud side and magnets as rotors on the blade end portion sides (including circular ring and rotating duct) and the radius of the shroud, the greater the opening portion of the shroud (hereinafter referred to as bore), the more effectively lift and propulsive forces can be generated. However, in Patent Document 11, there is no consideration about expansion and contraction of the blades that constitute the rotor such as a propeller. In Patent Document 6, there are only two considerations in terms of centrifugal force and temperature change about expansion and contraction of the blades, and there is no consideration about deflection and/or distortion due to the weight of the blades themselves when the blades are elongated and used in horizontal position. Also, since the invention has been originally made on the assumption that the diameter is up to about 1.2m (0.6m in radius), expansion and contraction of the blades can be addressed insufficiently and it is extremely difficult to construct a shroud included rotor having a bore with a diameter of greater than about 3m (about 1.5m in radius) even if the disclosed mechanism may be expanded and generalized, though the shroud included rotor has the drive principle of linear motors that can exhibit a more advantageous effect with an increased bore. In Patent Document 3, although there is an electromechanical mechanism capable of addressing great expansion and contraction of the blades in the blade thickness of the blades, the rapid change in the blowout direction is somewhat fragile, and it is therefore preferable to use the rotor under an environment that is less affected by a strong gyroscopic effect such as adjusting lift forces while changing the attack angle of the blades at any position in the rotation surface using, for example, a sliding device or using in a contra-rotating manner without tilting the rotational disk surface. In Patent Document 1, in order to enable the characteristic of the shroud included rotor having the drive principle of linear motors that can exhibit a more advantageous effect with an increased bore to maximize its advantageous effect, there are rotational support portions for reducing deflection and/or distortion due to the weight of the blades themselves across the longitudinal direction of the blades and expansion and contraction of the blades can be addressed by, for example, absorbing centrifugal forces on the blades as well as expansion and contraction caused by heat that cannot be removed even if the rotational support portions may be used using a rotating duct, whereby it is theoretically possible to construct a shroud included rotor having an infinitely large bore and to use the rotor even under an environment where the blowout direction may be changed rapidly.

As for tilting, Patent Documents 2, 5, 9, 13, 15 and Non-Patent Document 1 each employ a tilt system around one axis on a vertical plane. The tilt system is provided by an electric motor, a gear device, a planetary gear device, a rack-pinion device, a hydraulic device, a rack-pinion type cylinder device, or a rapid wind direction changing device, where tilting is to be performed gradually except for the rapid wind direction changing device. For example, in Patent Document 9, it takes 129 to 60 seconds to tilt by 90 degrees. Even faster tilting takes a few seconds and normal tilting takes more than about one minute. In Patent Document 4, a biaxial tilting mechanism is achieved by a rack-pinion type cylinder device, where a large force is required to overcome a strong gyroscopic effect to change the blowout direction, which reduces the rotation speed accordingly. It is therefore estimated that it takes a few seconds to tilt by 90 degrees at a maximum, and the angular range in which the rack-pinion type cylinder device can be tilted is limited because of its structure having a cylinder, whereby the tilt direction may be limited, being far from free yet with two axes. Further, since wake flow from the fan engine has an extremely high temperature and is elongated, turning the airframe to a direction where wake flow blows against the airframe assumes great risk and thereby is simply impractical to result in a significant limitation even if the airframe may be protected by a shield plate.

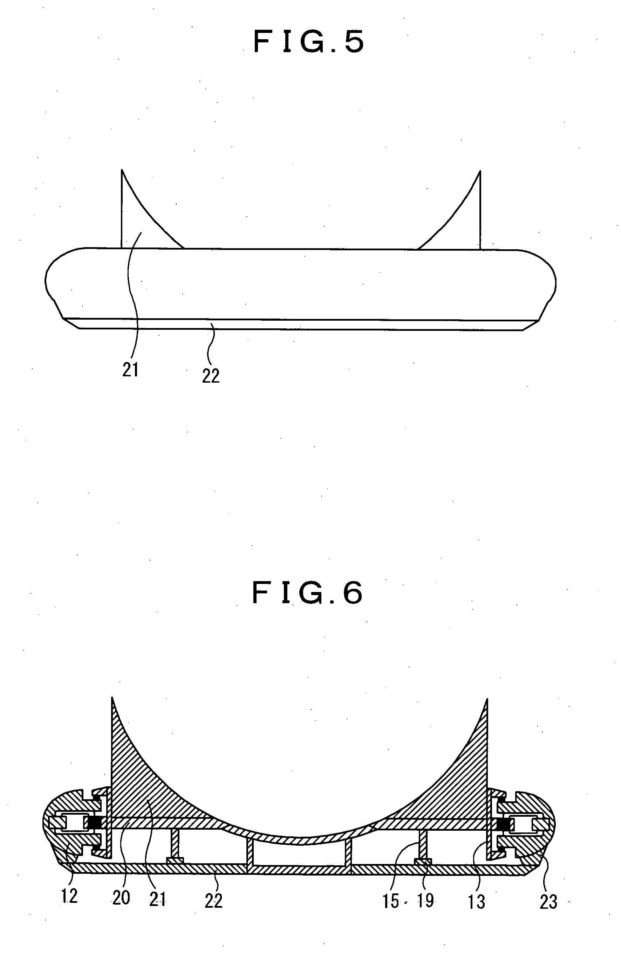

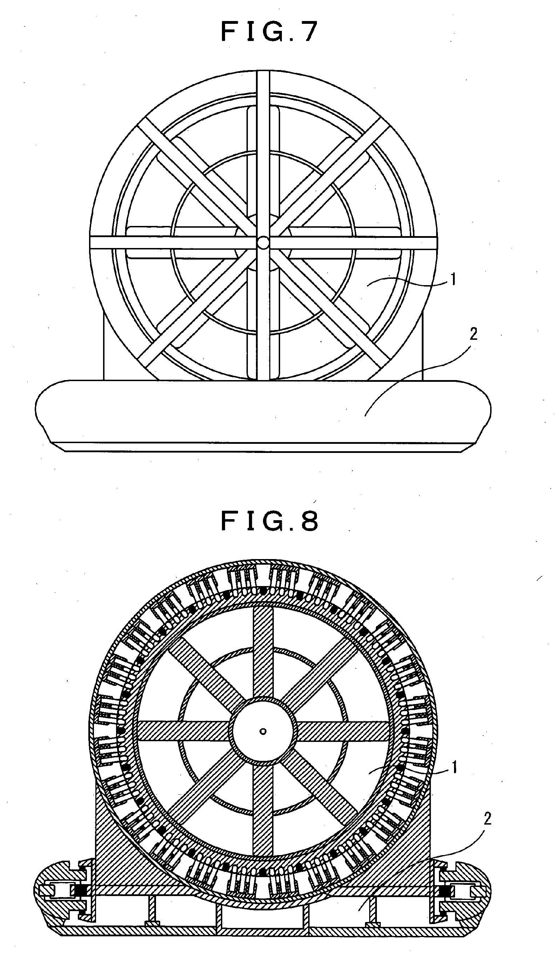

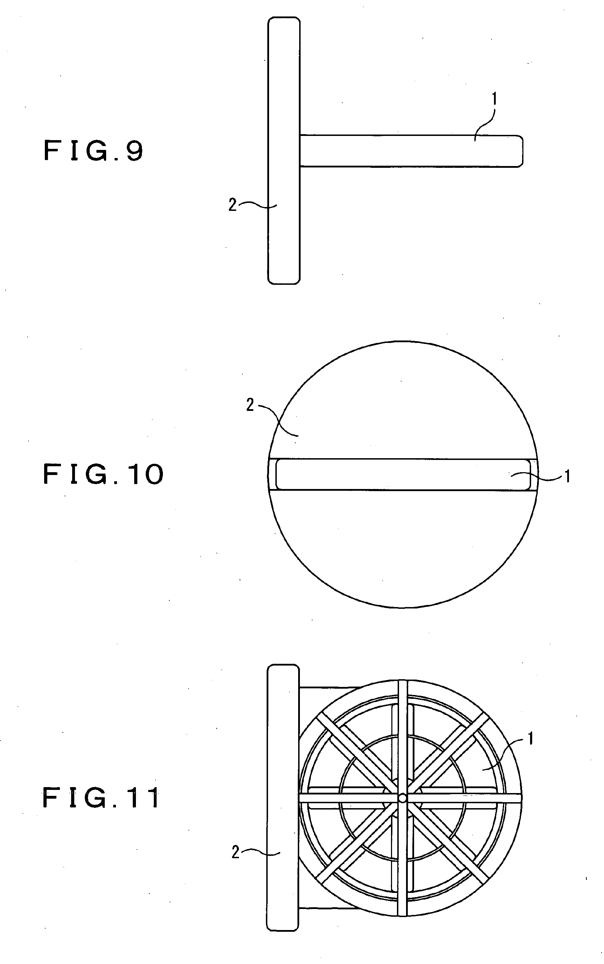

The present invention places importance on the possibility of achieving mass transportation, freer flights, and safer services in an energy-saving manner. Accordingly, the configuration according to claim 2 in the scope of claims for the present invention closely resembles the contour shown in Figs.6, 7, and 9 of Patent Document 12, where a ducted rotor in which a rotor is covered with a duct is arranged in a transverse part of the airframe. However, driving forces are supplied from the rotation axis, i.e., the rotational center of the rotor in Patent Document 12 and the rotor is supported at the rotation axis thereof, i.e., at a single point, where the drive principle of linear motors is not applied to the blade end portions. The reason that the rotor is fixed firmly and arranged on either side (wall) of the airframe in the present invention is that implications and advantages of canceling lift force imbalances generated between the forward-moving and backward-moving sides of the blades via the airframe and of making various complex and fragile hinges unnecessary are provided. This can be achieved only by allowing the rotor to be fixed firmly on the side surface (wall) of the airframe in addition to having a mechanism in which the rotor is held at, at least, two points, e.g., the upper and lower parts of the rotation axis or the rotation axis and the blade ends so that the rotation axis cannot be damaged by large stress due to a lift force imbalance. However, since Patent Document 12 includes no such mechanism, the left and right rotors in Patent Document 12 have no specific characteristic different from those of the other multi-rotor systems as well as no beneficial effect relative to the other multi-rotor systems. Also, the duct is simply installed by the four rod-shaped duct installation devices that are connected to the airframe, and there is a description that in the case of further strengthening the installation, the duct is pulled taut tightly and more completely using wires and turn buckles, etc., which cannot be tilted together with the rotor. Although the rotor is to be installed in consideration of its balance, the vertical center-of-gravity position in Figs.6 and 7 cannot be balanced even if the ducted rotor drive section shown in the drawings may have a substantial weight and even if the duct may be installed in an anteroposterior center-of-gravity position that is balanced when viewed in the traveling direction. Although there is no particular disclosure about how to get the aircraft forward in the case of the arrangements shown in Figs.6 and 7, if there is provided a swash plate of a kind used in common helicopters and the rotational disk surface is tilted forward for forward moving, there is a high possibility that the aircraft is tilted backward to crash coincidentally The arrangement shown in Fig.9 in which a propeller or a ducted propeller for propulsion is used without tilting the rotational disk surface becomes a little more likely, but cannot be put into practical use easily. Meanwhile, Patent Document 13, which has embodied 90-degree tilting for the first time in the fields of helicopters, discloses a mechanism in which the main rotor of a helicopter can be tilted up to 90 degrees using a hydraulic or electric motor, but when the main rotor is tilted by 90 degrees after the aircraft is carried to a certain height in the sky by lift forces on the main rotor, nothing will generate lift forces for the helicopter, where all that is left is to crash. Therefore, Patent Document 13 provides a far more dangerous vehicle than the arrangements shown in Figs.6, 7, and 9 of Patent Document 12 where it is extremely difficult to achieve safer flights due to unbalanced center-of-gravity and there is an extremely high possibility that when the rotor is tilted forward, the aircraft is tilted backward to fall in a spin.

In addition, as for mass transportation, Patent Document 8 provides a description that allows for a larger transportation capacity than the present invention by arranging a disk-shaped propeller device on the side surface of a structure (on the entire periphery of a spherical building), while Patent Document 7 provides a description about amphibious operations, both of the descriptions being short on specifics and little better than fantasy

As for control during cruising in Patent Documents 4, 5, 9, 15 and Non-Patent Document 1, although it is possible as a conventional art to change the propulsive forces of the left and right propellers independently, the wings are controlled in principle to change the traveling direction. Since the fan engine in Patent Document 4 has a biaxial tilting mechanism, it is possible to change the traveling direction by turning the fan engine downward and leftward or rightward in a minor movement in airports. However, in the case of fan engines that use jet fuel, it is difficult to fine-adjust the engine output and there is a large time delay from an indication of increasing or reducing the output, and further it is extremely difficult to incorporate a mechanism for changing the attack angle to adjust airflow in the blades of a fan engine rotating at an extremely high speed, whereby it is extremely difficult to achieve freer flights by turning the fan engine leftward or rightward and increasing or reducing the output when changing the traveling direction of the aircraft. Even if the operations may be facilitated by introducing a computer, the response speed of the fan engine and the rotation speed of the tilting device cannot be increased, resulting in no improvement in operationality.

In operations using rotors such as helicopters or flying platforms, in the case of trying to gather and embody inventions other than that proposed by the present inventor to achieve mass transportation, freer flights, and safer services in an energy-saving manner that the present invention aims, a plurality of rotors for generating lift and propulsive forces on either side of the airframe such as shown in Fig.7 of Patent Document 12 are required. Since some of the installed rotors will get forward while rotating in an approximately horizontal plane, there will occur lift force imbalances between the forward-moving and backward-moving sides of each rotor. Although various kinds of conventional hinges may be used to address the lift force imbalances, it is more advantageous to cancel the lateral lift force imbalances by fixing rotors symmetrically onto either side surface or wall of the airframe. If the rotor is of a kind in which rotor blades are supported at a rotor mast, i.e., at a single point, the rotor mast may be damaged due to reduced strength, whereby it is necessary that the rotor blades can be supported at two points or more to reduce the loads on the rotor mast. This can be achieved by candidates such as a rotor with the rotational outer end portions thereof being held by a ducted fan according to Patent Document 6, a shroud included rotor according to Patent Document 11, or a fixed ring guide according to Patent Document 10 and a rotor with the blade ends thereof being supported by ring-shaped members (blade supporting pipes) in a rotor frame according to Patent Document 14. However, none of the candidates can address expansion and contraction of the rotor blades sufficiently and it is difficult and thereby impractical to use a rotor having a large bore horizontally. In Patent Documents 6 and 11 among those candidates, since deficiencies in addressing expansion and contraction of the blades that has a large impact on the spacing between magnets on the static (stator) and rotational (rotor) sides are lethal because driving forces are generated in blade end portions, it is extremely difficult to perform operations with a diameter of greater than about 3m (about 1.5m in radius). Patent Document 10 may not be put into practice if the rollers in the outer - end portions are applied with load. However, assuming that the structure in Patent Document 14 includes a mechanism in which the blades can be expanded and contracted as well as the blade ends can slide smoothly because there is no disclosure about the structure and specific functions of the ring-shaped members (blade supporting pipes) that support the blade ends, it can be assumed that some rotors according to Patent Document 14 are arranged and placed on the side surface (wall) of an airframe according to Patent Document 12. Since further freer flights require a structure and a function whereby a rotor according to Patent Document 14 can be tilted rapidly up to 360 degrees, it is possible to use a rack-pinion type cylinder device according to Patent Document 4 that has a relatively high tilt speed. However, there is an angular restriction and limitation within which the rack-pinion type cylinder device according to Patent Document 4 can be tilted, and even such faster tilting takes a few seconds for tilting by 90 degrees, the rotation speed being not enough. Accordingly, since the rotor according to Patent Document 14 cannot achieve energy saving because the drive is applied to the rotation axis thereof in a conventional manner, while in the tilting device according to Patent Document 4, the tilt angle is restricted and limited as well as the rotation speed is low, both of them cannot solve the problem and achieve the object of the present inventor.

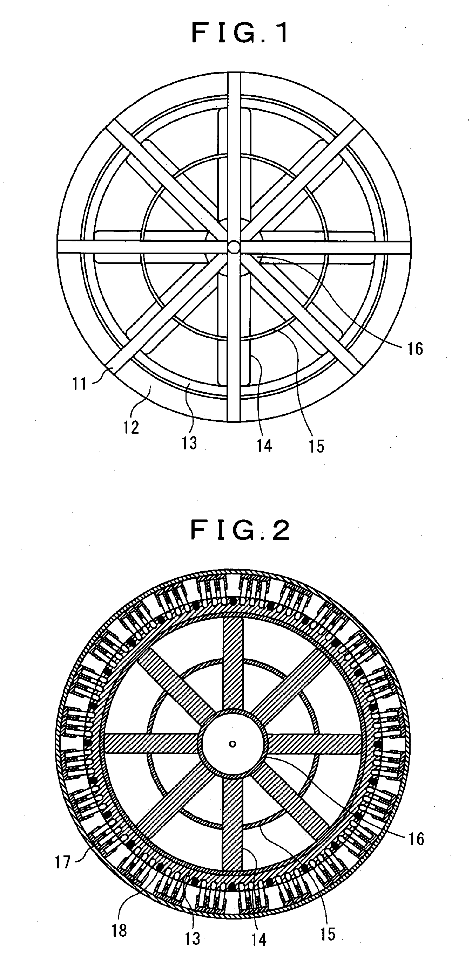

[Patent Document 1] Japanese Patent Application No. 2004-048686 (Claim 1, Figs.4 and 6)
[Patent Document 2] Japanese Patent Application No. 2003-290873 (Claim 1, Fig.13)
[Patent Document 3] Japanese Patent Application No. 2002-383031 (Claim 1, Figs.1, 2, 4, and 6)
[Patent Document 4] Japanese Patent Laid-Open Publication No. 2003-137192 (Claims 1, 2, and 5, Figs.1, 2, 5, 6, 8, 9, 10, 11, and 12)
[Patent Document 5] Japanese Patent Laid-Open Publication No. 2002-205694 (Claims 1, 2, and 3, Figs. 1, 7, 8, and 9)
[Patent Document 6] Japanese Patent Laid-Open Publication No. 2001-097288 (Claim 6, Figs.7 and 8)
[Patent Document 7] Japanese Patent Laid-Open Publication No. 2001-048098 (Claim 1, Figs.1 and 2)
[Patent Document 8] Japanese Patent Laid-Open Publication No. 2001-026295 (Claim 1, Figs.1 and 2)
[Patent Document 9] Published Japanese Translation of PCT Application No. Hei 11-513635 (Claims 1, 2, 7, 10, 11, 23, 24, and 26, Figs. 1, 2, 3, 6, 9, and 12)
[Patent Document 10] Japanese Patent Laid-Open Publication No. Hei 9-142392 (Claim 1, Paragraphs 0011 and 0013, Figs.1, 2, 3, 4, and 5)
[Patent Document 11] Japanese Patent Laid-Open Publication No. Hei 7-205897 (Claim 1, Paragraphs 0001 and 0008, Figs.1, 2, and 3)
[Patent Document 12] Japanese Patent Laid-Open Publication No. Hei 6-092294 (Claims 1, 2, 3, and 4, Figs.6, 7, and 9)
[Patent Document 13] Japanese Patent Laid-Open Publication No. Hei 5-330491 (Claims 1, 2, 3, and 4, Figs.1, 2, 3, 4, 5, 6, 7, 8, 9, 10, 11, 12, 13, 14, 15, 16, 17, and 18)
[Patent Document 14] Japanese Patent Laid-Open Publication No. Hei 5-301600 (Claim 1, Paragraphs 0014, 0015, 0020, and 0021, Figs. 1, 2, 3, 4, 5, 6, 7, 8, 9, 10, 11, 12, 13, and 14)
[Patent Document 15] Japanese Patent Laid-Open Publication No. Hei 5-077789 (Claim 1, Figs.1 and 2)
[Patent Document 16] Japanese Patent Laid-Open Publication No. 2003-170898 (Claims 1, 4, 5, 6, and 7, Fig.1)
[Patent Document 17] Published Japanese Translation of PCT Application No. 2003-512253 (Claims 1, 2, 3, 4, 5, 6, 7, 8, 9, 10, 11, 12, 13, 14, 15, 16, 17, 18, and 19, Paragraphs 0002, 0006, 0007, 0008, 0009, 0010, 0011, 0012,0013,0015,0017,0018,0019,0022,0023,0024,0025,0026,0027,0028, 0029, 0030, 0031, 0033, and 0036, Figs.1, 2, 3, and 4)
[Non-Patent Document 1] Wataru Nishikawa, "Aviation Now: Four-engine Tilt-rotor Aircraft", Japan Aviation News (online edition) uploaded on September 21, 2000 at <URL: http://www2g.biglobe.ne.jp/~aviation/qtr000921.html>, searched on April 19, 2004

### [Disclosure of the Invention]

### [Problem to be Solved by the Invention]

A problem to be solved is to achieve mass transportation, freer flights, and safer services in an energy-saving manner by producing a device capable of freely changing airflow and wind direction in which the blowout direction of a light shroud included rotor having the drive principle of linear motors that can freely change airflow can be changed rapidly and accurately and by attaching the device capable of freely changing airflow and wind direction to an airframe to control airflow and wind direction.

### [Means for Solving the Problem]

The present invention proposes a shroud included rotor having the drive principle of linear motors in the vicinities of the blade end portions as a motor over conventional systems in which driving forces of a motor that is placed in the vicinity of the center of rotor blades are applied to the rotational center axis thereof to rotate the rotor blades and thereby to produce lift and propulsive forces while consuming a large amount of energy.

The shroud included rotor having the drive principle of linear motors can be formed into a turntable due to its structure by replacing the blade portion of the rotor with a disk or a cylinder. A device provided so that the shroud included rotor is attached to the surface of the disk or cylinder of the turntable is defined as a rapid wind direction changing device. The shroud included rotor as a source of lift or propulsive forces can be turned to any direction rapidly and accurately around one axis up to 360 degrees by attaching the shroud included rotor having the drive principle of linear motors to the rapid wind direction changing device.

A device in which the shroud included rotor having the drive principle of linear motors is placed perpendicularly and integrally on the rapid wind direction changing device that can be rotated freely around one axis up to 360 degrees is defined as a rapid airflow generation wind direction changing device. The thus arranged rapid airflow generation wind direction changing device can change airflow freely as well as wind direction rapidly and accurately

The present invention can achieve an energy-saving aircraft that allows for transportation of a larger number of passengers and cargoes, freer flights in the sky, and easier control while ensuring safety by attaching the rapid airflow generation wind direction changing device that can freely change airflow and wind direction to the side surface (wall) of the airframe by at least one for each side, that is, at least two in total for both side surfaces (walls), which has been difficult to think so far or impractical due to, for example, a strong gyroscopic effect and/or weight even if may be thought, and by controlling the airflow and wind direction of each rapid airflow generation wind direction changing device freely.

### [Effect of the Invention]

The shroud included rotor having the drive principle of linear motors has a simple structure, a small weight, and a high fuel efficiency, and further since the blade ends are not opened, there occurs no roaring shock wave that would otherwise be generated by the blade ends in the forward-moving direction of the aircraft, whereby it is quite useful to apply the rotor to helicopters and flying platforms. If the rotor is made attachable directly to the side surface (wall) of the airframe and a plurality of such rotors are operated as rapid airflow generation wind direction changing devices that can freely change airflow and wind direction, it is possible to satisfactorily show the characteristics of the shroud included rotor having the drive principle of linear motors and to achieve mass transportation without depending on lift force generating means such as a fixed wing or a balloon (hereinafter referred to collectively as fixed wing). It is further possible not only to ensure high controllability and safety but also to achieve energy saving, and various kinds of hinges that are required for conventional rotors are made unnecessary, which can facilitate production and maintenance.

### [Best Mode for Carrying Out the Invention]

As a shroud included rotor having the drive principle of linear motors according to the present invention, there is employed a rotating duct type shroud included rotor according to Patent Document 1, which has a rotational support portion for preventing the blades from being deflected and/or distorted due to their own weights and arranged in such a manner that a rotating duct absorbs expansion and contraction of the blades that cannot be absorbed by the rotational support portion to make it possible to produce a shroud included rotor having a large rotation radius. Also, a rapid wind direction changing device for placing the rotating duct type shroud included rotor thereon to freely change the blowout direction thereof is defined by providing an attachment fixture for attachment of the rotating duct type shroud included rotor on a turntable that is produced by replacing the blade portion of the rotating duct type shroud included rotor with a disk or a cylinder. A rapid airflow generation wind direction changing device is produced by attaching the rotating duct type shroud included rotor integrally to the turntable of the rapid wind direction changing device in such a manner that the outer periphery of the rotor comes into perpendicular contact with the turntable.

The rapid airflow generation wind direction changing device according to the present invention has a flat bottom plate so as to be fixed firmly to the side surface (wall) of the airframe, which results in not only that the side surface (wall) of the airframe can absorb gyroscopic effects included in the shroud included rotor and strong stress due to a gyroscopic effect but also that lift and propulsive forces on the rotating duct type shroud included rotor can be transmitted easily to the airframe through the blade end portions. When such devices are attached to the airframe in a symmetrical relationship, lift force imbalances between the forward-moving and backward-moving sides of the blades that are generated when the horizontally rotating rotor is applied with a forward speed can be absorbed completely through the side surface (wall) of the airframe, which makes flapping hinges, feathering hinges, and dragging hinges unnecessary though required for conventional helicopters with open blade ends, resulting in a simplified structure and an improved reliability.

As for how to attach the rapid airflow generation wind direction changing device according to the present invention to the airframe, if the side surface (wall) of a structure suitable for flights as the airframe forms an approximately vertical plane, the bottom plate of the rapid airflow generation wind direction changing device is attached directly and parallel to the side surface (wall) of the airframe so that the rotation surface of the rotating duct type shroud included rotor is made approximately horizontal. However, in the case of placing importance on the stability of the aircraft during a flight, the device is attached with a camber angle by tilting the rotation surface of the rotating duct type shroud included rotor from horizontal so that the side nearer the airframe is made lower while the far side is made higher and thereby the blowout direction of the rotating duct type shroud included rotor is turned outward, resulting in an increase in stability. On the contrary, in the case of aiming at improving the lateral kinematic performance of the aircraft during a flight, the device is attached with an inverse camber angle by tilting the rotation surface of the rotating duct type shroud included rotor so that the side nearer the airframe is made higher while the far side is made lower and thereby the blowout direction of the rotating duct type shroud included rotor is turned inward, resulting in an improvement in kinematic performance. Also, if the blades of the rotating duct type shroud included rotor are arranged so as to rotate in the direction in which the side nearer the airframe moves forward while the far side moves backward, it is possible to reduce stress due to lift force imbalances during a forward movement that is applied to the attachment fixture when the rotating duct type shroud included rotor is mounted on the rapid wind direction changing device.

As for the number of rapid airflow generation wind direction changing devices according to the present invention to be attached to the airframe, the aircraft can be achieved by at least one for each side surface (wall) of a structure as the airframe, that is, at least two in total for both side surfaces (walls). However, in the case of a practical aircraft for transporting a larger number of passengers and cargoes, the aircraft should be flyable, for safety reasons, even with half of the total rapid airflow generation wind direction changing devices attached to the airframe. Specifically, in the case of transporting passengers, four or more rapid airflow generation wind direction changing devices should be attached to each side surface of the aircraft and safety-related devices such as power supplies and control devices should be operated independently on halves so that even in the unlikely event that some of the rapid airflow generation wind direction changing devices go down, the rest of the rapid airflow generation wind direction changing devices can be used for safe landing.

### [First Embodiment]

Figs.1 to 4 show an embodiment in the case of using a rotating duct type shroud included rotor according to Patent Document 1.

### [Second Embodiment]

Figs.5 and 6 show an embodiment of a rapid wind direction changing device in which the blade portion of a rotating duct type shroud included rotor according to Patent Document 1 is replaced with a disk-shaped turntable.

### [Third Embodiment]

Figs.7 to 14 show an embodiment of a rapid airflow generation wind direction changing device in which a rotating duct type shroud included rotor is placed perpendicularly on a rapid wind direction changing device.

### [Fourth Embodiment]

Figs. 15 to 35 show an embodiment of an aircraft placing importance on safety in which four rapid airflow generation wind direction changing devices are attached to each side surface (wall) of a large-sized structure suitable for flights, that is, eight such devices in total are attached to both side surfaces (walls), the aircraft serving as if it were a ferry in the sky.

### [Fifth Embodiment]

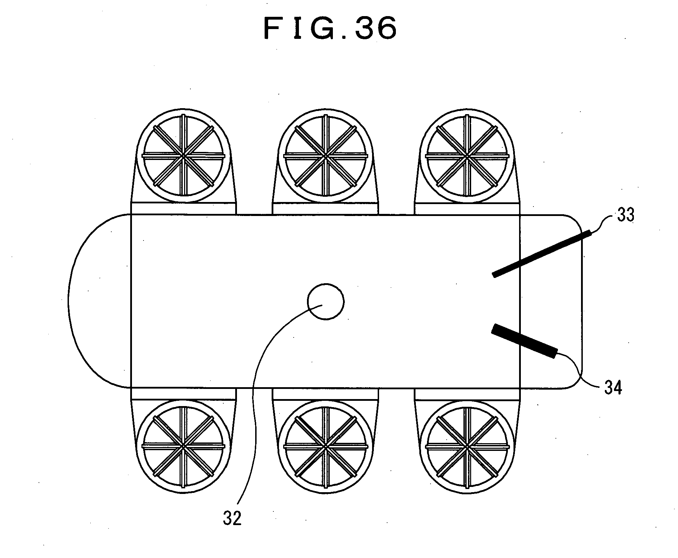

In the present embodiment, large-sized aircrafts have their respective social values as a ferry in the sky, while middle- or small-sized aircrafts such as shown in Fig.36 can be used as an unmanned observation/reconnaissance aircraft for the case where passengers may face difficulties and/or dangers such as observation of volcanic activities. Extremely small-sized aircrafts can be utilized as a hobby such as a radio control model aircraft.

### [Industrial Applicability]

Operations as an aircraft with rapid airflow generation wind direction changing devices attached to the side surface (wall) of the airframe allow a safe aircraft having a larger transportation capacity, a freer mobility, and an easier controllability to be achieved in an energy-saving manner, which can make a considerable contribution to the progress of society in some fields centering on transportation.

### [Brief Description of the Drawings]

[Fig.1] A plan view of an embodiment of a rotating duct type shroud included rotor according to Patent Document 1;
[Fig.2] A horizontal cross-sectional view of the embodiment of the rotating duct type shroud included rotor according to Patent Document 1;

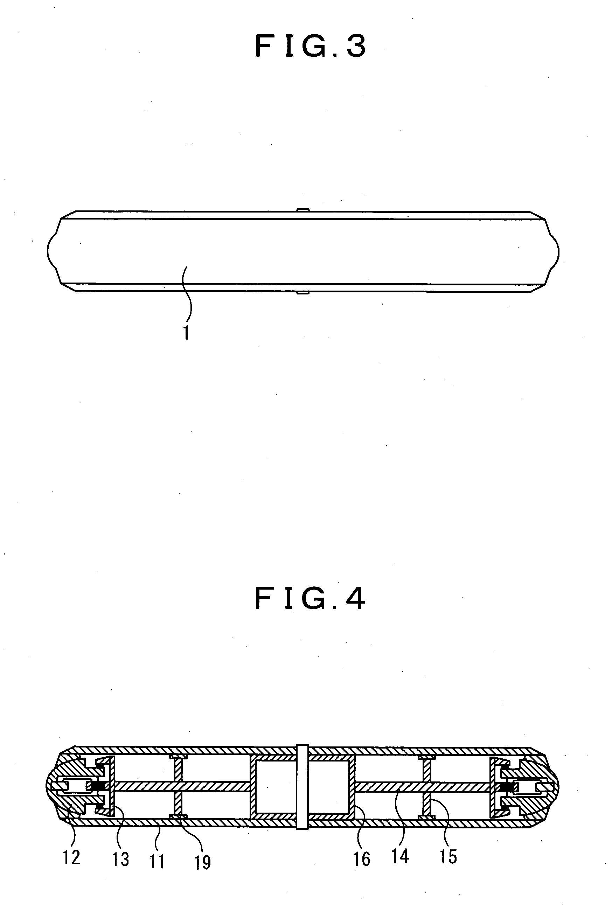

[Fig.3] A front view of the embodiment of the rotating duct type shroud included rotor according to Patent Document 1 (the same applies to a side view);
[Fig.4] A vertical cross-sectional view of the embodiment of the rotating duct type shroud included rotor according to Patent Document 1;
[Fig. 5] A front view of a rapid wind direction changing device including an attachment fixture for attaching a rotating duct type shroud included rotor according to Patent Document 1 to a disk-shaped turntable that is a replacement for the blade portion of the rotating duct type shroud included rotor;
[Fig.6] A vertical cross-sectional view of the rapid wind direction changing device including the attachment fixture for attaching the rotating duct type shroud included rotor according to Patent Document 1 to the disk-shaped turntable that is a replacement for the blade portion of the rotating duct type shroud included rotor, where the numeral 23 may indicate a reinforced-plastic or metal connector to have no impact on the performance of the device, but may indicate a seismic isolation connector so that it is possible to reduce the transmission of micro-vibrations to the airframe that are generated when the rapid wind direction changing device and the rotating duct type shroud included rotor are combined to be operated as a rapid airflow generation wind direction changing device;
[Fig.7] A front view of a rapid airflow generation wind direction changing device in which a rotating duct type shroud included rotor according to Patent Document 1 is mounted perpendicularly and integrally on a rapid wind direction changing device when placed on the ground with the bottom plate down;
[Fig.8] A vertical cross-sectional view of the rapid airflow generation wind direction changing device in which the rotating duct type shroud included rotor according to Patent Document 1 is mounted perpendicularly and integrally on the rapid wind direction changing device when placed on the ground with the bottom plate down;
[Fig.9] A front view when the rapid airflow generation wind direction changing device is attached to the side surface (wall) of the airframe;
[Fig.10] A side view when the rapid airflow generation wind direction changing device is attached to the side surface (wall) of the airframe;
[Fig.11] A plan view when the rapid airflow generation wind direction changing device is attached to the side surface (wall) of the airframe;

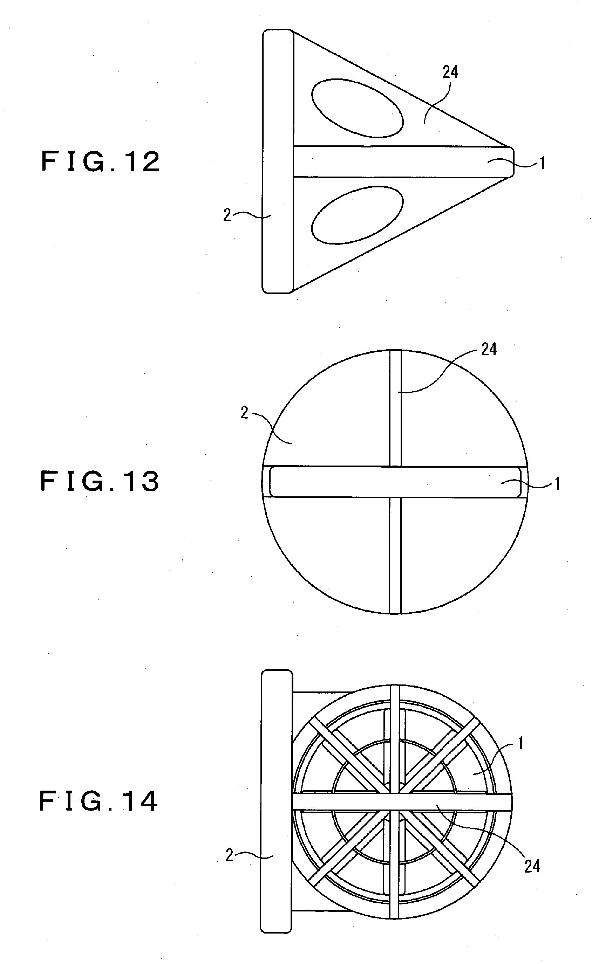

[Fig.12] A front view when a common rapid airflow generation wind direction changing device that is provided with reinforcing plates so as to endure operations under a fierce environment such as a heavy weather or a battlefield is attached to the side surface (wall) of the airframe;
[Fig. 13] A side view when the common rapid airflow generation wind direction changing device that is provided with the reinforcing plates so as to endure operations under a fierce environment such as a heavy weather or a battlefield is attached to the side surface (wall) of the airframe;
[Fig.14] A plan view when the common rapid airflow generation wind direction changing device that is provided with the reinforcing plates so as to endure operations under a fierce environment such as a heavy weather or a battlefield is attached to the side surface (wall) of the airframe;

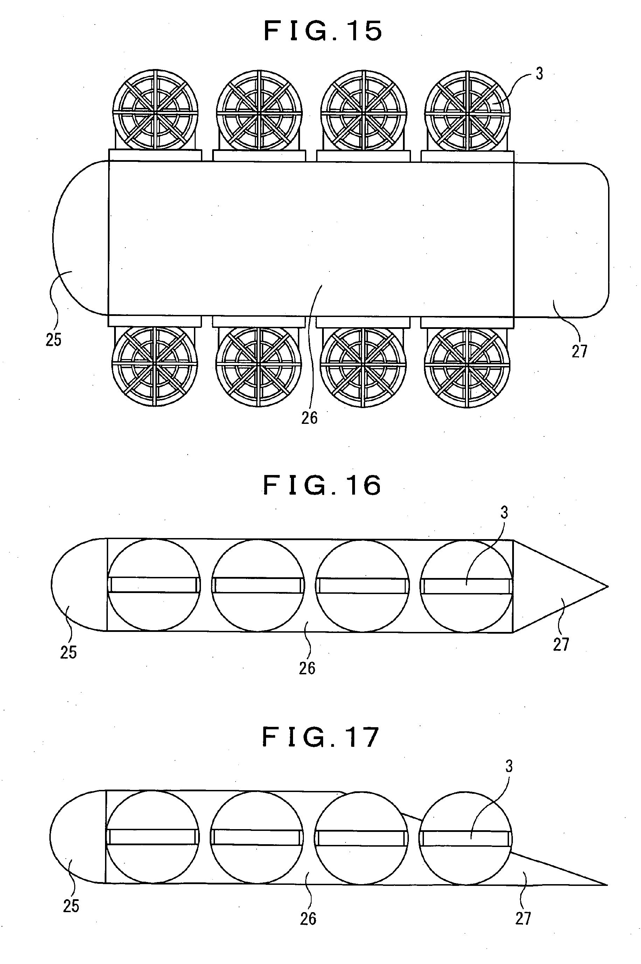

[Fig. 15] A plan view of an aircraft in which four rapid airflow generation wind direction changing devices are attached to each side surface (wall) of the airframe, that is, eight such devices in total are attached to both side surfaces (walls);
[Fig. 16] A side view of the aircraft when the shape of the airframe is like a spindle;
[Fig. 17] A side view of the aircraft when the shape of the airframe is like a wing;

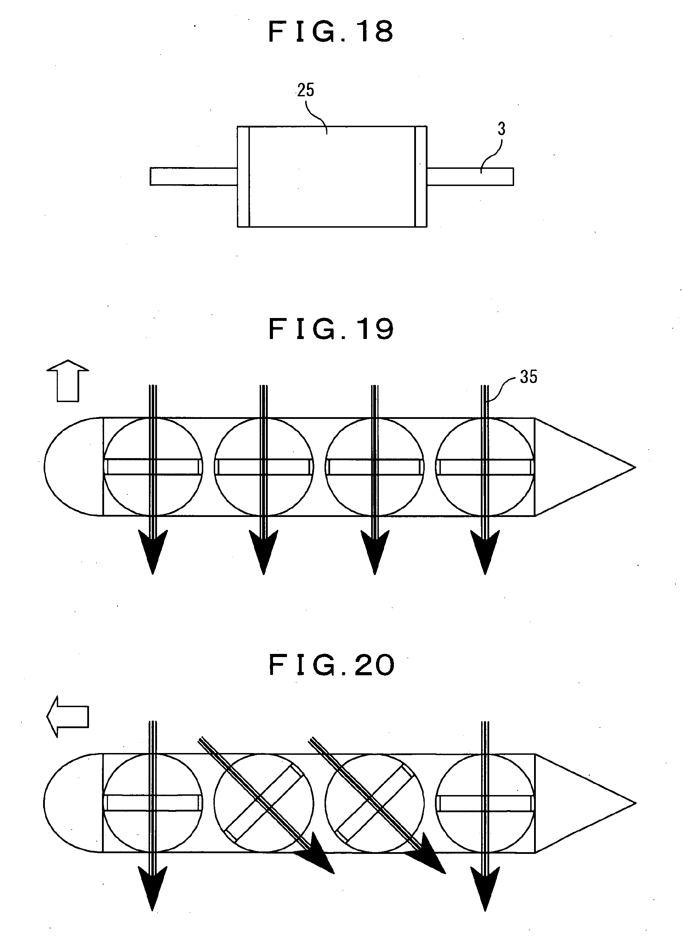

[Fig. 18] A front view of the aircraft;
[Fig.19] A side view of the spindle-like aircraft showing an operation state of the rapid airflow generation wind direction changing devices when taking off and moving upward;
[Fig.20] A side view of the spindle-like aircraft showing an operation state of the rapid airflow generation wind direction changing devices when moving forward with the blowout direction of the two inner devices being tilted;

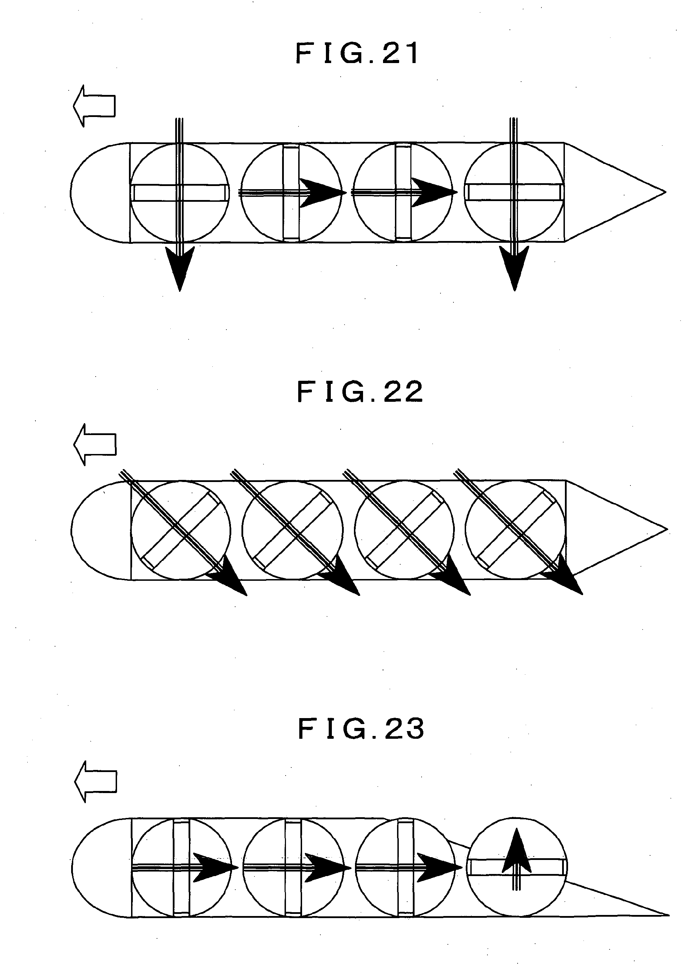

[Fig.21] A side view of the spindle-like aircraft showing an operation state of the rapid airflow generation wind direction changing devices when moving forward with the blowout direction of the two inner devices being made horizontal;
[Fig.22] A side view of the spindle-like aircraft showing an operation state of the rapid airflow generation wind direction changing devices when moving forward with the blowout direction of all the four devices being tilted;
[Fig.23] A side view of the wing-like aircraft showing an operation state of the rapid airflow generation wind direction changing devices when moving forward while utilizing an ascending force due to the structure of the airframe itself, where the three front devides generate only a horizontal propulsive force while the rearmost device suppresses uplift of the rear part of the airframe due to the ascending force, resulting in a negative lift force;

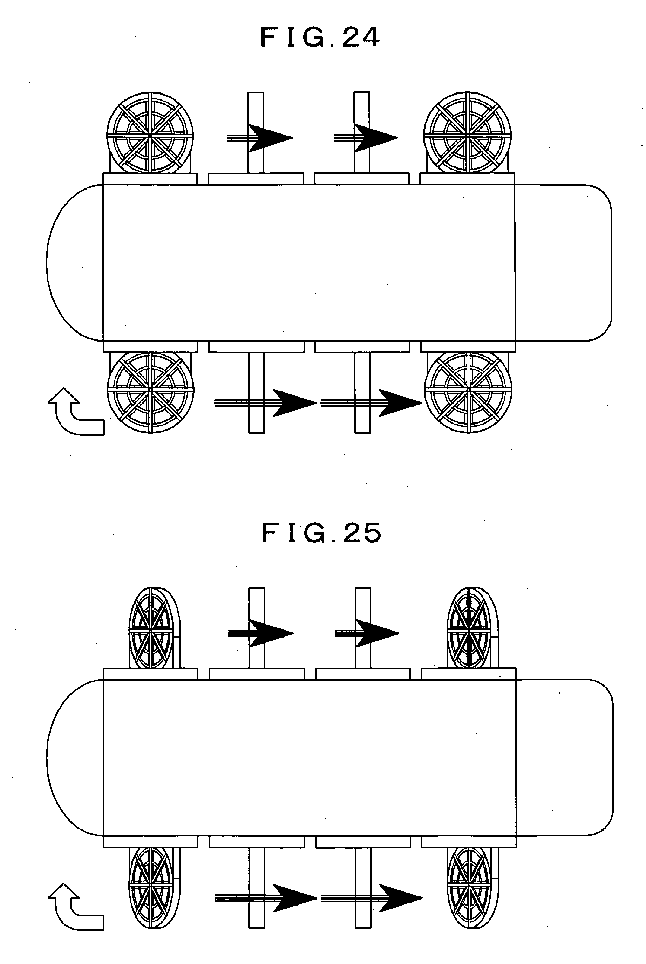

[Fig.24] A plan view showing an operation state of the rapid airflow generation wind direction changing devices when the aircraft turns slowly clockwise (rightward) through propulsive force differences between the left and right side surfaces thereof;
[Fig.25] A plan view showing an operation state of the rapid airflow generation wind direction changing devices when the aircraft turns slowly clockwise (rightward) through a propulsive force difference between the left and right side surfaces thereof while somewhat keeping the speed in the traveling direction;

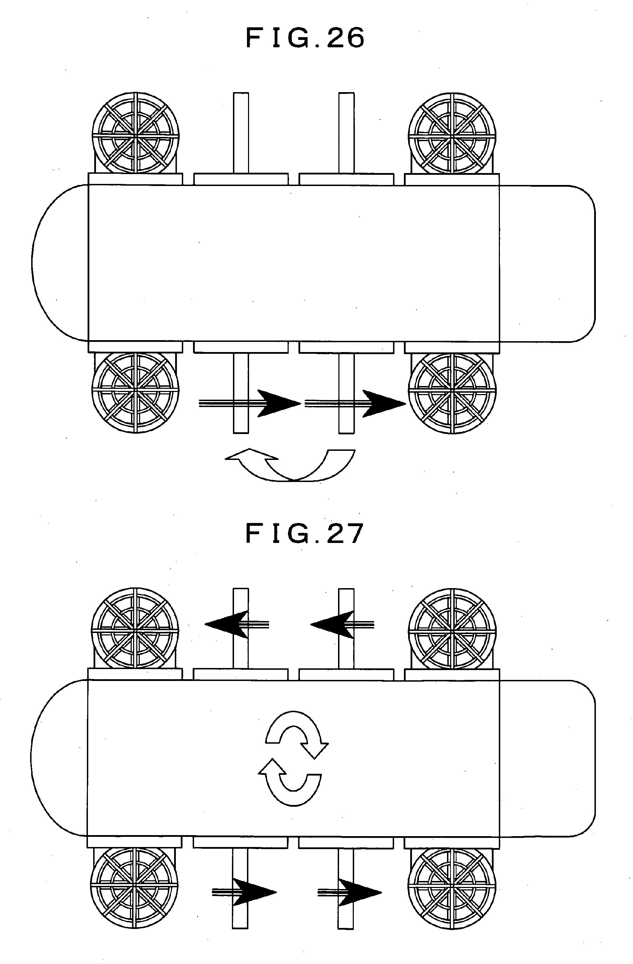

[Fig.26] A plan view showing an operation state of the rapid airflow generation wind direction changing devices when the aircraft turns rapidly clockwise by generating a propulsive force only on one side thereof, where a static application would result in a pivotal brake turn in which the aircraft rotates around a point on the right side thereof;
[Fig.27] A plan view showing an operation state of the rapid airflow generation wind direction changing devices when the aircraft turns rapidly clockwise by generating propulsive forces of mutually opposite directions on either side thereof, where a static application would result in an ultra-pivotal brake turn in which the aircraft rotates around a point at the center thereof;

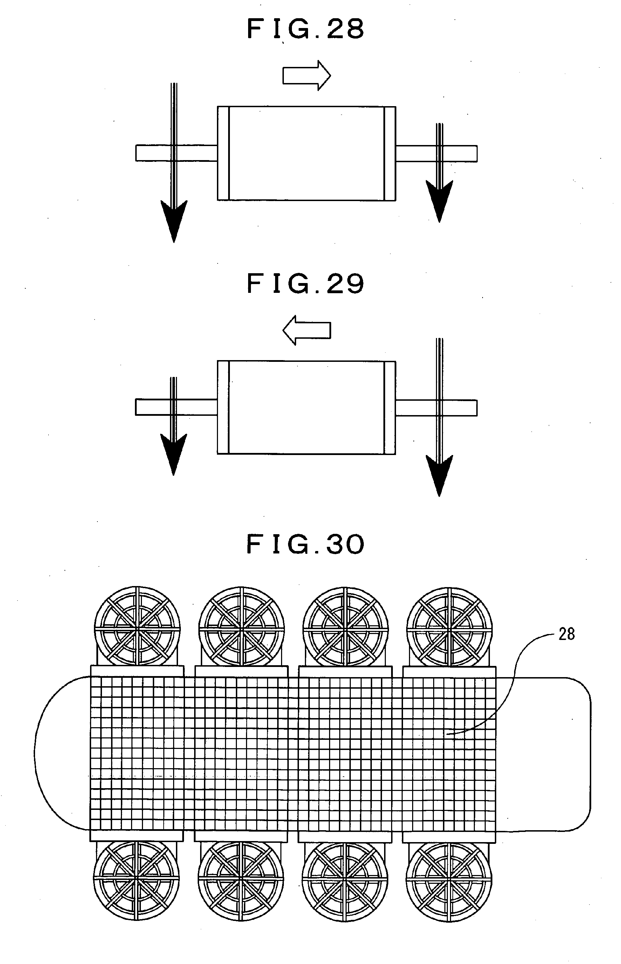

[Fig.28] A front view showing an operation state of the rapid airflow generation wind direction changing devices when the aircraft moves laterally through an ascending force difference between the left and right sides thereof, where the aircraft moves rightward on the paper;
[Fig.29] A front view showing an operation state of the rapid airflow generation wind direction changing devices when the aircraft moves laterally through an ascending force difference between the left and right sides thereof, where the aircraft moves leftward on the paper;
[Fig.30] A plan view when photovoltaic devices are attached to the ceiling part of the aircraft, which usually has a large area, to be an auxiliary power supply;

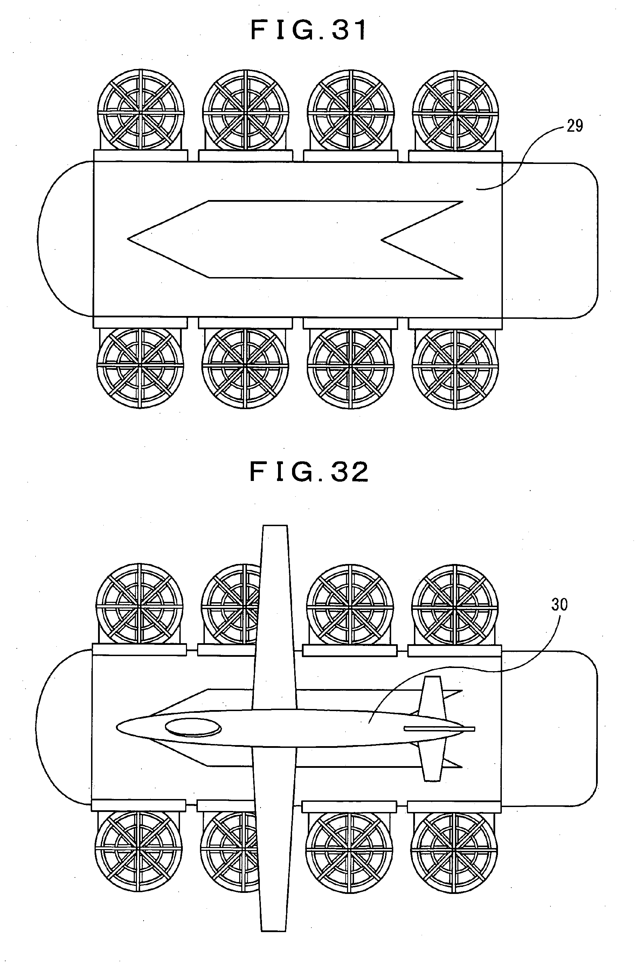

[Fig.31] A plan view when the ceiling part of the aircraft is reinforced to be a flight deck;
[Fig.32] A plan view showing a situation where another aircraft utilizes the flight deck of the foregoing aircraft in the sky, which can be utilized for takeoff and landing of small aircrafts and for takeoff of gliders, etc., in the sky;

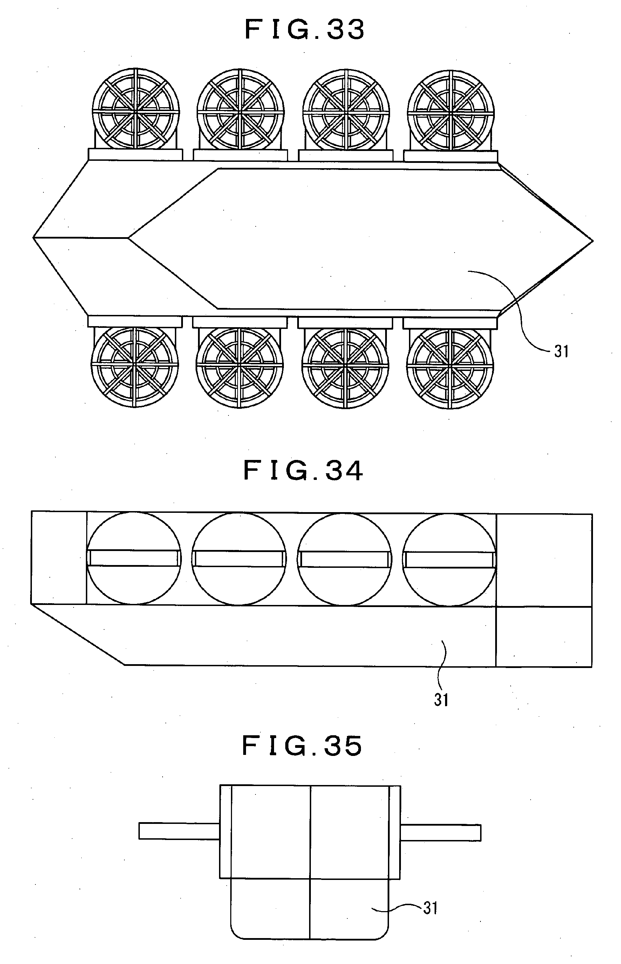

[Fig.33] A bottom view of the aircraft when the bottom surface is a ship bottom so as to be applicable to flight paths where there is a possibility of takeoff or landing from/on the water;
[Fig.34] A side view of the aircraft when the bottom surface is a ship bottom;
[Fig.35] A front view of the aircraft when the bottom surface is a ship bottom; and
[Fig. 36] A plan view of an unmanned observation/reconnaissance aircraft equipped with a GPS, a radio control device, and observational equipment in which three rapid airflow generation wind direction changing devices are attached to each side surface (wall) of a small-sized structure suitable for flights, that is, six such devices in total are attached to both side surfaces (walls), where particularly small-sized ones are for hobby applications.

### [Explanation of References]

1: Rotating duct type shroud included rotor
2: Rapid wind direction changing device
3: Rapid airflow generation wind direction changing device
11: (Fixed) support portion
12: Shroud
13: Rotating duct
14: (Rotor) blade
15: Rotational support portion
16: Hub
17: Electromagnet
18: Permanent magnet
19: Bearing
20: Turntable
21: Attachment fixture
22: Bottom plate
23: Connector or Seismic isolation connector
24: Reinforcing plate
25: Crew compartment
26: Passenger compartment
27: Cargo compartment
28: Photovoltaic device
29: Flight deck
30: Aircraft with flight deck used
31: Ship bottom
32: GPS
33: Radio control antenna
34: Data transmission antenna
35: Airflow and wind direction caused by rapid airflow generation wind direction changing device

## Claims

1. A rapid airflow generation wind direction changing device for generating airflow and changing wind direction in a rotor such as a propeller or a fan, said device being constructed by integrating an airflow generating device and a rapid wind direction changing device, wherein
(1) said airflow generating device comprises a shroud included rotor having the drive principle of linear motors (hereinafter referred to as shroud included rotor having the drive principle of linear motors in blade end portions, shroud included rotor having the drive principle of linear motors, or simply as shroud included rotor if there is no possibility of confusion with other components) including a shroud and a duct for generating a linear-motor driving force in the vicinities of blade end portions that is composed of an attracting force and a repulsive force generated between an electromagnet disposed on the fixed shroud side as a stator and a permanent magnet disposed on the blade side including a rotating duct as a rotor, and
(2) said rapid wind direction changing device comprises: a turntable produced in such a manner that a disk or a cylinder having the drive principle of linear motors in the outer peripheral portion thereof rotates with respect to an airframe; and an attachment fixture for attaching said shroud included rotor to said turntable in a positional relationship in which the rotation axis of said shroud included rotor and the rotation axis of said turntable intersect at right angles to each other.

2. An aircraft in which one or more rapid airflow generation wind direction changing devices according to claim 1 are attached to each side surface or wall of the airframe, that is, two or more such devices in total are attached to both side surfaces or walls in a mutually symmetrical positional relationship, wherein said rapid airflow generation wind direction changing devices are fixed directly and firmly to the side surface or wall of the airframe via the bottom plates thereof.
